# EUROPÄISCHE PATENTSCHRIFT

(11) **EP 2 364 247 B1**
(45) Veröffentlichungstag und Bekanntmachung des Hinweises auf die Patenterteilung: **11.07.2012**
(21) Anmeldenummer: 09771695.5
(22) Anmeldetag: 11.11.2009
(51) Int. Cl.: B29C 33/34, B29C 43/04, B29C 43/08, B29D 23/20, B29C 31/00

(54) **Vorrichtung sowie Verfahren zum Herstellen von Tuben**
Device and method for producing tubular containers
Dispositif et procédé de fabrication de conteneurs en forme de tube

(30) Priorität: 11.11.2008 DE 102008056797
(43) Veröffentlichungstag der Anmeldung: 14.09.2011
(73) Patentinhaber: KMK Lizence Ltd., Port Louis (MU)
(72) Erfinder: LÄUBLI, Julius, CH-8640 Rapperswil (CH)
(74) Vertreter: Wagner, Kilian
(86) Internationale Anmeldenummer: PCT/EP2009/008037
(87) Internationale Veröffentlichungsnummer: WO 2010/054804

(56) Entgegenhaltungen:
- EP-A1- 0 297 257
- EP-A1- 1 862 282
- EP-A2- 0 794 044
- FR-A1- 2 596 699
- FR-A1- 2 797 602
- US-A1- 2001 048 953

## Beschreibung

Die Erfindung betrifft eine Vorrichtung zum Herstellen von Tuben gemäß dem Oberbegriff des Anspruchs 1 sowie ein Verfahren zum Herstellen von Tuben gemäß dem Oberbegriff des Anspruchs 11.

Bekannte Vorrichtungen zum Herstellen von Kunststofftuben weisen mehrere, fest auf einem rotierbaren Tisch angeordnete Dornanordnungen auf, jeweils umfassend mehrere Dorne, auf denen die Tuben schrittweise an über den Umfang des rotierbaren Tisches verteilt angeordneten Arbeitsstationen gefertigt werden. Jede Arbeitsstation weist dabei eine der Anzahl der Dorne einer Dornanordnung entsprechende Anzahl an Werkzeugen auf, um die Tuben an sämtlichen Dornen einer Dornanordnung gleichzeitig fertigen zu können. Nachteilig bei den bekannten Vorrichtungen sind die hohen Anlagekosten.

Aus der US 3 990 826 A ist ein Domkarussell bekannt, bei dem Dornanordnungen fest auf einer Indexscheibe angeordnet sind und so von Arbeitsstation zu Arbeitsstation transportiert werden können. Ferner ist es bekannt, dass jede Dornanordnung aus zwei identischen, fest auf der Indexscheibe angeordneten Dorngruppen besteht, die in Bezug auf die Drehachse der Indexscheibe diametral gegenüberliegend angeordnet sind und nicht bei einer Arbeitsstation relativ zu der Indexscheibe verstellbar sind.

Aus der FR 2 797 602 ist eine in der Automobiltechnik zur Anwendung kommende Vorrichtung bekannt, bei welcher auf einem rotierbaren Tisch mehrere Werkzeuganordnungen angeordnet sind. Mindestens eine der Werkzeuganordnungen umfasst zwei Gruppen mit unterschiedlichen Werkzeugen um die Variabilität der Vorrichtung ohne große Umrüstzeiten zu erhöhen.

Aus der EP 0 297 257 ist eine Vorrichtung zum Herstellen von Verpackungstuben bekannt, bei welcher mehrere Dornanordnungen zwischen Arbeitsstationen rotierbar sind. Die Position der Dornanordnungen auf dem Rotationstisch ist unveränderlich.

Aus der EP 0 794 004 A2 ist eine Dornvorrichtung mit rotierbar angeordneten Dornen bekannt.

Die DE 40 09 661 C1 zeigt ein Dornkarussell, bei der Dornanordnungen in ihrer Gesamtheit relativ zu der Indexscheibe sind, um mit seitlich der Indexscheibe angeordneten Pressen zusammenwirken zu können.

Der Erfindung liegt die Aufgabe zugrunde, eine kostengünstiger realisierbare Vorrichtung zum Herstellen von Tuben anzugeben. Ferner besteht die Aufgabe darin, ein optimiertes Verfahren zum Herstellen von Tuben vorzuschlagen, welches den Einsatz kostengünstiger Herstellungs-Vorrichtungen ermöglicht. Bevorzugt soll der Durchsatz an fertigbaren Tuben nicht negativ beeinflusst werden.

Diese Aufgabe wird hinsichtlich der Vorrichtung mit den Merkmalen des Anspruchs 1 und hinsichtlich des Verfahrens mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Die Erfindung nutzt die Erkenntnis, dass mindestes zwei an voneinander beabstandeten Arbeitsstationen auszuführende Arbeitsschritte bei der Herstellung der Tuben auf den Dornen unterschiedlich lange dauern. So wird für Arbeitsschritte wie beispielsweise das Be- und Entladen der Dorne lediglich die Hälfte der Zykluszeit benötigt als für andere Prozessschritte wie beispielsweise das Verpressen der Tubenschulter. Auch bei Vorrichtungen, in denen keine Verpressung von Tubenschultern mit Tubenrohrkörpern stattfindet, sondern die Tubenschulter im Spritzgussverfahren an den Rohrkörper angespritzt wird, ist der Schritt des Festlegens der Tubenschulter an dem Tubenrohrkörper der zeitaufwendigste Verfahrensschritt. Bei aus dem Stand der Technik bekannten Vorrichtungen stehen die anderen, schneller arbeitenden Arbeitsstationen über eine vergleichsweise große Zeitspanne während des mindestens einen längeren Arbeitsschrittes still. Um diese Stillstandszeit einzelner Arbeitsstationen zu minimieren und gleichzeitig die Möglichkeit zu schaffen an mindestens einer schnell getakteten Arbeitsstation die Anzahl der Werkzeuge zu minimieren, vorzugsweise zumindest zu halbieren, schlägt die Erfindung vor, die Dorne mindestens einer Dornanordnung, vorzugsweise die Dorne sämtlicher Dornanordnungen, aufzuteilen in eine erste und mindestens eine zweite Dorngruppe, wobei die Dorngruppen der mindestens einen Dornordnung an mindestens einer Arbeitsstation zwischen mindestens einer, vorzugsweise ausschließlich einer, Bearbeitungsposition und mindestens einer Parkposition verstellbar sind. Bevorzugt ist diese Verstellbewegung als Relativverstellbewegung der Dorngruppe zu Transportmitteln realisiert, mit denen die Dornanordnungen von Arbeitsstation zu Arbeitsstation transportierbar sind. Auf diese Weise wird es erstmals möglich, dass mindestens zwei Dorngruppen einer Dornanordnung nacheinander, jeweils in der Bearbeitungsposition an einer Arbeitsstation bearbeitet werden können, vorzugsweise in der Zeit, die die langsamste Arbeitsstation für eine Bearbeitung der Tuben auf einer anderen Dornanordnung, vorzugsweise für die gleichzeitige Bearbeitung sämtlicher Tuben dieser Dornanordnung benötigt bzw. die der zeitintensivste Arbeitsschritt dauert. Im Falle des Vorsehens zweier Dorngruppen pro Dornanordnung kann hierdurch die Anzahl der Werkzeuge der die zwei Dorngruppen nacheinander bearbeitenden Arbeitsstation halbiert werden, im Falle des Vorsehens von drei Dorngruppen, auf ein Drittel reduziert werden, etc. Ganz besonders bevorzugt ist dabei eine Ausführungsform, bei der sämtliche Dorngruppen der mindestens einen Dornanordnung die gleiche Anzahl an Dornen aufweisen. Bevorzugt ist für jede Dorngruppe der mindestens einen Dornanordnung eine separate Parkposition vorgesehen, wobei auch eine Ausführungsform mit einer der Anzahl der Dorngruppen abzüglich eins entsprechenden Anzahl von Parkpositionen realisierbar ist. Weiter bevorzugt ist es, wenn für sämtliche Dorngruppen der mindestens einen Dornanordnung ausschließlich eine gemeinsame (nacheinander anzusteuernde) Bearbeitungsposition an der entsprechenden Arbeitsstation vorgesehen ist.

Wie eingangs angedeutet, ermöglicht die Realisierung einer relativen Verstellbarkeit der Dorngruppen mindestens einer Dornanordnung relativ zur Bewegungsbahn der Dornanordnungen von Arbeitsstation zu Arbeitsstation bzw. zu den Transportmitteln für die Dornanordnungen die Reduzierung der Werkzeuge an mindestens einer Arbeitsstation, da nicht sämtliche Dorngruppen gleichzeitig, sondern mindestens zwei Dorngruppen einer Dornanordnung nacheinander bearbeitet werden können. In erster Näherung wird für den Fall, dass die Bearbeitungszeit für eine Dorngruppe zumindest näherungsweise der Bearbeitungszeit für den längsten Bearbeitungsschritt geteilt durch die Anzahl der Dorngruppen der Dornanordnung entspricht, die Durchsatzmenge der Vorrichtung nicht negativ beeinflusst.

Besonders bevorzugt ist eine Ausführungsform der Vorrichtung, bei der die erste und die mindestens zweite Dorngruppe nicht nacheinander zwischen der Bearbeitungsposition und der mindestens Parkposition bzw. zwischen der mindestens einen Parkposition und der Bearbeitungsposition verstellbar sind, sondern bei der die Verstellung der Dorngruppen der mindestens einen Dornanordnung gleichzeitig erfolgt, vorzugsweise in einer gekoppelten Bewegung.

Besonders bevorzugt ist es dabei, wenn die erste und die zweite Dorngruppe durch translatorisches Verstellen der die Dorngruppen aufweisenden Dornanordnung zwischen der Bearbeitungsposition und der Parkposition verstellbar sind. Anders ausgedrückt wird bevorzugt die gesamte Dornanordnung verstellt und nicht die Dorngruppen einer Dornanordnung relativ zueinander. Weiter bevorzugt sind die Dorngruppen der Dornanordnung hierzu als Dornreihen ausgebildet, die sich vorzugsweise quer zur translatorischen Verstellrichtung erstrecken. Zur Realisierung einer translatorischen Verstellbewegung wird, wie später noch erläutert werden wird, eine Kurvenscheibe eingesetzt. Alternativ ist der Einsatz, insbesondere pneumatischer, hydraulischer oder elektrischer Linearverstellantriebe möglich, die vorzugsweise zusammen mit der zugeordneten Dornanordnung von Arbeitstationen zu Arbeitsstation transportierbar sind. Alternativ zu einer translatorischen Verstellbewegung kann die Dornanordnung auch durch Rotieren verstellt werden, so dass die Dorngruppen der Dornanordnung, vorzugsweise durch Rotieren der gesamten Dornanordnung, in einer rotatorischen Bewegung zwischen der zugehörigen Bearbeitungsposition und der Parkposition relativ zu der Arbeitsstation verstellbar sind.

In Weiterbildung der Erfindung ist mit Vorteil vorgesehen, dass die Dorngruppen von Arbeitsstation zu Arbeitsstation auf einer (bis auf die Auslenkbewegungen der Dorngruppen) kreisförmigen Bewegungsbahn transportierbar sind, relativ zu der die Dorngruppen bei mindestens einer Arbeitsstation verstellbar sind. Alternativ ist auch eine Ausführungsform realisierbar, bei der die Dorngruppen zumindest abschnittsweise translatorisch von Arbeitsstation zu Arbeitsstation transportiert werden, wobei auch bei dieser Ausführungsform die Dornanordnungen bevorzugt in einem Kreislauf geführt werden.

Für die Realisierung einer kreisförmigen Bewegungsbahn der Dornanordnungen von Arbeitsstation zu Arbeitsstation ist es bevorzugt, die Dornanordnungen auf einem rotierbaren Tisch (Transportmittel) anzuordnen, relativ zu dem zumindest die Dorngruppen einer Dornanordnung verstellbar sind. Wird zumindest eine Dornanordnung, vorzugsweise werden sämtliche Dornanordnungen, nicht wie im Stand der Technik statisch auf einem rotierbaren Tisch, sondern relativ zu diesem verstellbar angeordnet. Der Tisch ist bevorzugt mit Hilfe eines Servomotors oder alternativ eines Schrittschaltgetriebes rotierbar antreibbar.

Ganz besonders bevorzugt ist es, wenn die Verstellbewegung der ersten und der zweiten Dorngruppe als eine von einer Kurvenscheibe geführte Bewegung realisiert ist, wobei die Kurvenscheibe bevorzugt relativ zu dem Tisch, bzw. zu der Bewegungsbahn der Dornanordnungen von Arbeitsstation zu Arbeitsstationen, rotierbar ist. Die Realisierung einer, vorzugsweise eine Führungskulisse aufweisende, Kurvenscheibe ermöglicht eine besonders präzise Verstellung der mindestens zwei Dorngruppen zwischen der ihnen zugeordneten Bearbeitungsstation und der ihnen zugeordneten Parkposition.

Besonders zweckmäßig ist es, wenn die Kurvenscheibe bei einem Transport der Dornanordnungen von Arbeitsstation zu Arbeitsstation in eine erste Richtung verstellt wird, vorzugsweise in die Transportrichtung der Dornanordnungen. Bevorzugt ist diese Bewegung der Kurvenscheibe in die erste Richtung derart ausgelegt, dass hierbei keine Relativbewegung der Kurvenscheibe zu den Dornanordnungen stattfindet. Weiter bevorzugt ist es, wenn zum Verstellen der ersten und der mindestens zweiten Dorngruppe relativ zu deren Bewegungsbahn von Arbeitsstation zu Arbeitsstation die Kurvenscheibe in eine zweite Richtung angetrieben ist, die der ersten Richtung, insbesondere der Transportrichtung, entgegengesetzt ist. Bevorzugt findet die Verstellbewegung der Kurvenscheibe in diese zweite Richtung bei stillstehenden Arbeitsmitteln, vorzugsweise bei stillstehendem Tisch, statt, also dann, wenn die Dornanordnungen nicht von Arbeitsstation zu Arbeitsstation transportiert werden. Anders ausgedrückt ist die Kurvenscheibe bevorzugt in der Art einer Ratsche abwechselnd in eine erste und eine zweite, der ersten Richtung entgegengesetzten Richtung bewegbar, vorzugsweise derart, dass bei der Verstellbewegung in die erste Richtung keine Relativbewegung zwischen der Kurvenscheibe und den Dornanordnungen realisiert ist, sondern lediglich bei der Verstellbewegung in die zweite Richtung um die Dorngruppen nur bei stillstehendem Tisch, vorzugsweise translatorisch, zwischen der zugehörigen Bearbeitungsposition und der zugehörigen Parkposition zu verstellen.

In Weiterbildung der Erfindung ist mit Vorteil vorgesehen, dass die Parkposition der ersten und/oder der zweiten Dorngruppe an einer der Arbeitsstationen der Bearbeitungsposition einer anderen, vorzugsweise der in Bewegungsrichtung benachbarten Arbeitsstation, entspricht, um zu gewährleisten, dass jeder Tubenrohling vor dem nächsten Bearbeitungsschritt ausreichend Ruhezeit einhalten kann.

Ganz besonders bevorzugt ist eine Ausführungsform, bei der eine der Arbeitsstationen, relativ zu der die Dornanordnungen mittels der Transportmittel verstellbar sind, eine Entladestation ist. Alternativ handelt es sich nicht um eine Entladestation, sondern um eine Umladestation zum Umladen der unfertigen Tuben auf weitere Dorne, die mittels einer benachbart zu den Transportmitteln angeordneten Transporteinrichtung zwischen weiteren Arbeitsstationen verstellbar sind. Bevorzugt umfassen dabei sowohl die Transportmittel als auch die Transporteinrichtung jeweils einen rotierbaren Tisch. Ganz besonders bevorzugt werden die noch unfertigen Tuben mittels der Transporteinrichtung zu mindestens einer Deckelmontagestation transportiert, an der auf ein Außengewinde im Bereich eines Tubenauslasses ein Deckel, vorzugsweise durch Verdrehen des Deckels, montiert wird.

Die Erfindung führt auch auf ein Verfahren zum Herstellen von Tuben, insbesondere von Kunststofftuben und/oder von mindestens einer Folie mit mindestens einer Kunststofflage, vorzugsweise unter Verwendung einer nach dem Konzept der Erfindung ausgebildeten Vorrichtung. Kern des Verfahrens ist es, dass nicht nur die Dornanordnungen von Arbeitsstation zu Arbeitsstation transportiert werden, sondern dass bei zumindest einer Dornanordnung, vorzugsweise bei sämtlichen Dornanordnungen, die Möglichkeit gegeben ist, das Dorngruppen der mindestens einen Dornanordnung bei zumindest einer Arbeitsstation zwischen einer Bearbeitungsposition in der eine Dorngruppe mit der Arbeitsstation in Wechselwirkung treten kann und einer Parkposition verstellbar ist. Anders ausgedrückt wird die Möglichkeit einer Relativbewegung von Dorngruppen zumindest einer der Dornanordnungen relativ zu der eigentlichen Bewegungsbahn der Dornanordnung von Arbeitsstation zu Arbeitsstation geschaffen, damit bei zumindest einer Arbeitsstation nicht sämtliche Dorne der zumindest einen Dornanordnung, bzw. die darauf zustellenden Rohlinge, gleichzeitig von der Arbeitsstation bearbeitet werden müssen, sondern dass die Dorngruppen der Dornanordnung nacheinander von der Arbeitsstation bearbeitet werden können.

Im Hinblick auf vorteilhafte Weiterbildungen des Verfahrens wird auf die vorangehende Offenbarung bevorzugter Ausführungsformen der Vorrichtung verwiesen. Diesbezüglich offenbarte Merkmale sollen auch als verfahrensgemäß offenbart gelten und beanspruchbar sein.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematische Darstellung einer Vorrichtung zum Herstellen von Tuben,
- Fig. 2a bis Fig. 2d:: unterschiedliche Ansichten von Transportmitteln und Dornanordnungen einer Vorrichtung zum Herstellen von Tuben,
- Fig. 3a bis Fig. 3f:: unterschiedliche Relativpositionen zwischen einer Kurvenscheibe und mehreren, in Umfangsrichtung nebeneinander angeordneten Dornanordnungen.

In den Figuren sind gleiche Elemente und Elemente mit der gleichen Funktion mit den gleichen Bezugszeichen gekennzeichnet.

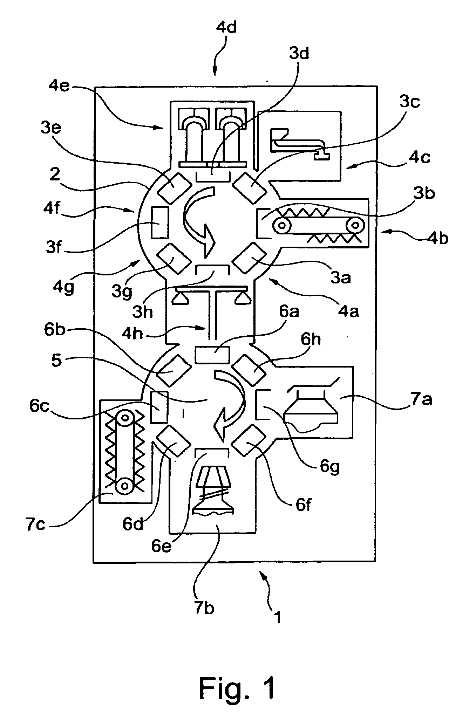

In Fig. 1 ist ausschnittsweise in einer stark schematisierten Ansicht eine Vorrichtung 1 zur Ausführung eines Verfahrens zur Herstellung von Tuben aus Kunststoff gezeigt. Die Vorrichtung 1 umfasst rotierbare Transportmittel 2 zum Transportieren von Dornanordnungen 3a-3h von Arbeitsstation 4a-4h zu Arbeitsstation 4a-4h. Insgesamt sind rund um die Transportmittel 2 acht Arbeitsstationen 4a-4h angeordnet. Bei der mit dem Bezugszeichen 4a gekennzeichneten Arbeitsstation handelt es sich um eine fakultative Arbeitsstation, die bei Bedarf beispielsweise zum Bestücken der Dornanordnungen 3a-3h mit einem Schulterschutz und/oder mit Einlegeteilen ausgebildet sein kann. Bei der Arbeitsstation 4b handelt es sich um eine Beladestation, mit der später noch zu erläuternde Dorngruppen der Dornanordnungen 3a-3h nacheinander mit Tubenrohrkörpern bestückbar sind. Bei der mit dem Bezugszeichen 4c gekennzeichneten Arbeitsstation handelt es sich um eine kombinierte Extrusions/Bestückungsstation, in der die Dorne der Dornanordnungen 3a-3h mit extrudierten Kunststoffringen bestückt werden. Bei der mit dem Bezugszeichen 4d gekennzeichneten, in Umfangsrichtung benachbarten Arbeitsstation handelt es sich um eine Kompressionsstation, bei der aus den zuvor bestückten Kunststoffringen Tubenschultern mit angeformten Auslässen geformt und gleichzeitig an die Tubenrohrkörper angeformt werden. Bei den drei benachbarten Arbeitsstationen 4e, 4f und 4g handelt es sich um Kühlungsstationen, bei denen die Schultern mit den daran angeformten Auslässen mit Hilfe von Gebläsen und/oder einer Dorninnenkühlung gekühlt werden. Die siebte, mit dem Bezugszeichen 4h gekennzeichnete Arbeitsstation ist eine Umladestation, mit der nicht fertige Tuben von den Transportmitteln 2 bzw. den Dornanordnungen 3a-3h der Transportmittel 2 abgenommen und auf eine Transporteinrichtung 5 bzw. auf Dornpakete 6a-6g umgeladen werden. Mit Hilfe der Transporteinrichtung 5 werden die Dornpakete 6 zwischen weiteren Arbeitsstationen 7a-7c verstellt, wobei die mit dem Bezugszeichen 7a gekennzeichnete Arbeitsstation eine optionale Siegelstation, die mit dem Bezugszeichen 7b gekennzeichnete Arbeitsstation eine Kappen- bzw. Deckelmontagestation und die mit dem Bezugszeichen 7c gekennzeichnete Arbeitsstation eine Entladestation ist. Wie sich aus Fig. 1 ergibt, entspricht die Anzahl der Dornanordnungen 3a-3h der Anzahl der Dornpakete 6. Auch entspricht die Anzahl der nicht gezeigten Dorne der Dornanordnungen 3a-3h der Anzahl der Dorne der Dornpakete 6. Wie sich weiter aus Fig.1 ergibt, rotieren die Transportmittel 2 in eine der Rotationsrichtung der Transporteinrichtung 5 entgegengesetzte Richtung, hier im Gegenuhrzeigersinn.

Bereits an dieser Stelle sei angemerkt, was zu einem späteren Zeitpunkt noch weiter ausgeführt werden wird, dass an den Arbeitsstationen 4a, 4b, 4c und 4h nicht gezeigte Dorngruppen der entsprechenden, sich an der jeweiligen Arbeitsstation befindlichen Dornanordnung nacheinander in Wechselwirkung mit der Arbeitsstation, 4a, 4b, 4c, 4h treten, d.h. von dieser nacheinander bearbeitet werden, wohingegen bei den anderen Arbeitsstationen 4d, 4e, 4f und 4g eine gleichzeitige Bearbeitung sämtlicher Dorne, d.h. der auf den Dornen befindlichen Tubenrohlinge der entsprechenden Dornanordnungen, stattfindet.

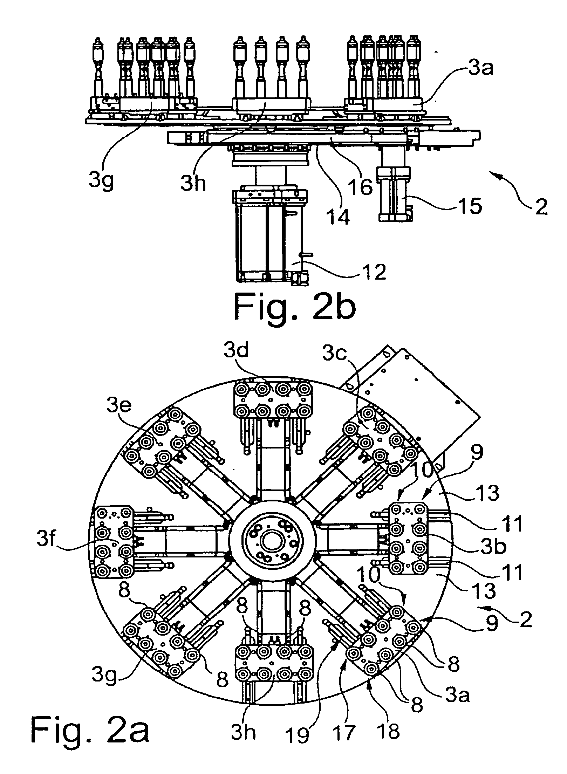

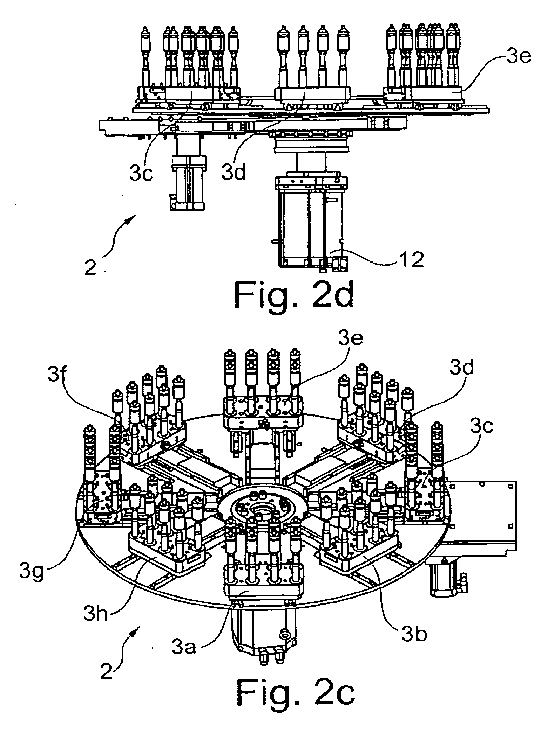

Fig. 2a bis 2d zeigen in unterschiedlichen, zum Teil perspektivischen Ansichten den Aufbau der Transportmittel 2 sowie der Dornanordnungen 3a-3h. Wie sich aus den Fig. 2a bis 2d ergibt, weist jede Dornanordnung 3a-3h zwei Gruppen von Dornen 8 auf, nämlich eine erste Dorngruppe 9 und eine ortsfest relativ zu dieser angeordnete zweite Dorngruppe 10. Beide Dorngruppen 9, 10 weisen die gleiche Anzahl von Dornen 8, hier vier Dorne 8, auf. Die Dorne 8 der beiden Dorngruppen 9, 10 sind jeweils als Dornreihe angeordnet, wobei sich die Dornreihen tangential zur Bewegungsrichtung der Dornanordnungen 3a-3h von Arbeitsstation 4a-4h zu Arbeitsstation 4a-4h erstrecken.

Jede Dornanordnung 3a-3h ist wiederum auf Führungsschienen 11 angeordnet, auf denen die Dornanordnungen 3a-3h relativ zu der kreisförmigen Bewegungsbahn, auf der die Dornanordnungen 3a-3h von Arbeitsstation zu Arbeitsstation verstellbar sind, verstellt werden können. Bei dieser translatorischen Verstellbewegung entlang der Führungsschienen 11 werden die entsprechenden Dornanordnungen 3a-3h relativ zu den Transportmitteln 2, genauer relativ zu einem mittels eines Servomotors 12 rotierbar antreibbaren Tisch 13, verstellt. Zur Realisierung dieser relativen Verstellbewegung ist eine später noch im Detail zu erläuternde Kurvenscheibe 14 vorgesehen, die mit Hilfe eines als Servomotor 12 ausgebildeten Hilfsmotors 15 über einen Riemen 16 antreibbar ist.

Durch Verstellen spezifischer Dornanordnungen 3a-3h relativ zu der kreisförmigen Bewegungsbahn können die Dorngruppen 9, 10 jeder entsprechend verstellbaren Dornanordnung 3a-3h zwischen einer Bearbeitungsposition, in der die Arbeitsstation mit der entsprechenden Dorngruppe 9, 10 in Wechselwirkung treten kann und jeweils einer Parkposition, in der die Arbeitsstation nicht mit der entsprechenden Dorngruppe in Wechselwirkung treten kann verstellt werden. Beispielhaft sei dies an der mit dem Bezugszeichen 3a gekennzeichneten Dornanordnung gemäß Fig. 2a erläutert. Bei dieser Dornanordnung 3a befindet sich die zweite Dorngruppe 10, d.h. die radial innere Reihe von Dornen 8, in einer Bearbeitungsposition 17, in der die nicht eingezeichnete Arbeitsstation mit der zweiten Dorngruppe 10 in Wechselwirkung treten kann. Die erste Dorngruppe 9 befindet sich in einer ersten Parkposition 18, in der die nicht eingezeichnete Arbeitstation nicht mit den Dornen 8 der ersten Dorngruppe 9 in Wechselwirkung treten kann. Nach der Bearbeitung der zweiten Dorngruppe 10 wird die Dornanordnung 3 relativ zu den Transportmitteln 2 translatorisch derart nach radial innen verstellt, dass die erste Dorngruppe 9 in die Bearbeitungsposition 17 gelangt, in der die nicht gezeigte Arbeitsstation mit der ersten Dorngruppe 9 in Wechselwirkung treten kann. Die zuvor in der (gemeinsamen) Bearbeitungsposition 17 stationierte zweite Dorngruppe 10 befindet sich dann in einer radial inneren, zweiten Parkposition 19, in der die Arbeitsstation nicht in Wechselwirkung mit der zweiten Dorngruppe 10 treten kann. Anders ausgedrückt sind den beiden Dorngruppen 9, 10 einer Dornanordnung 3a-3h eine gemeinsame Bearbeitungsposition 17 und jeweils eine eigene Parkposition 18, 19 zugeordnet.

Die Dornanordnungen 3a-3h können beliebig um weitere, vorzugsweise als Reihen ausgebildete, Dorngruppen erweitert werden, wobei eine entsprechende Anzahl von Parkposition vorgesehen werden muss. Die gezeigte Unterteilung der Dornanordnungen 3a-3h in jeweils zwei Dorngruppen 9, 10 ermöglicht es, dass bei bestimmten Arbeitsstationen nur eine der Anzahl der Dorne 8 der ersten oder der zweiten Dorngruppe 9, 10 entsprechende Anzahl von Werkzeugen vorgesehen werden sollte.

Die gezeigte Unterteilung der Dornanordnungen 3a-3h in jeweils zwei Dorngruppen 9, 10 ermöglicht es, dass bei bestimmten Arbeitsstationen nur eine der Anzahl der Dorne 8 der ersten oder der zweiten Dorngruppe 9, 10 entsprechende Anzahl von Werkzeugen vorgesehen werden muss. Lediglich an den Arbeitsstationen, an denen aus Zeitgründen eine gleichzeitige Bearbeitung sämtlicher Dorne der jeweils dort befindlichen Dornanordnung 3a-3h erfolgen muss, muss eine der Anzahl der Dorne 8 der entsprechenden Dornanordnung entsprechende Anzahl von Werkzeugen vorgesehen werden.

Wie später noch erläutert werden wird, werden nicht sämtliche Dornanordnungen 3a-3h an jeder Arbeitsstation relativ zur Bewegungsbahn translatorisch auf den Führungsschienen 11 verstellt. Die Verstellbewegung ist lediglich an den in Fig. 1 erläuterten Arbeitsstationen 4a, 4b, 4c und 4h realisiert, an denen die Dorngruppen 9, 10 der entsprechenden Dornanordnung 3a-3h nacheinander bearbeitet werden.

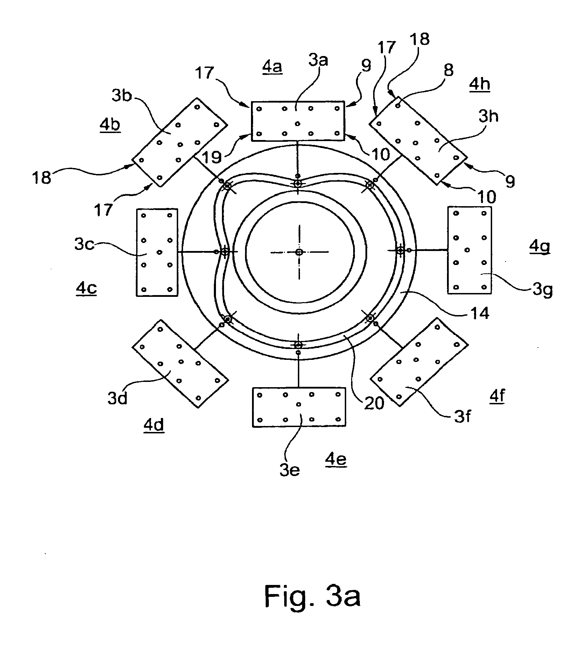

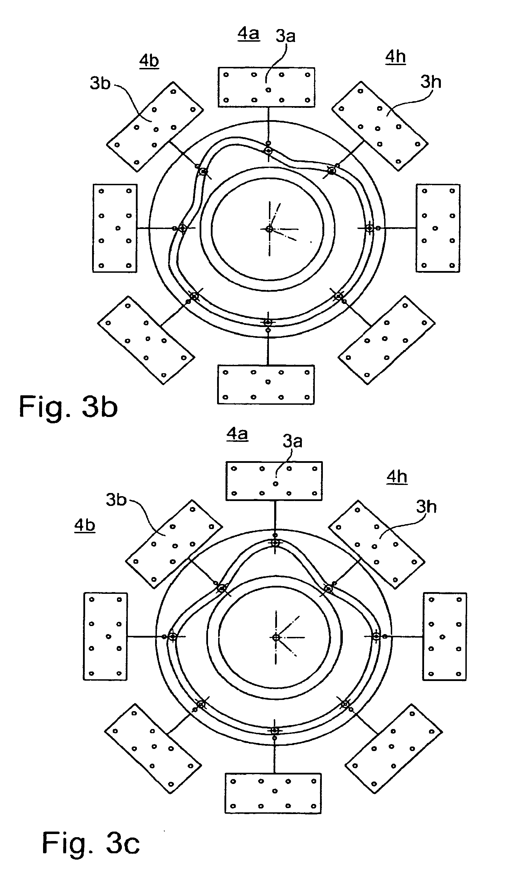

Im Folgenden wird anhand der Fig. 3a bis 3f die geführte relative Verstellbewegung der Dorngruppen relativ zur Bewegungsbahn bzw. zwischen einer Bearbeitungsposition und zwei Parkpositionen erläutert.

Wie sich aus Fig. 3a ergibt, befindet sich zu einem bestimmten Taktzeitpunkt die Dornanordnung 3a mit ihrer ersten Dorngruppe 9 und ihrer zweiten Dorngruppe 10, jeweils umfassend vier in Reihe angeordnete Dorne 8, bei der Arbeitstation 4a, die Dornanordnung 3b bei der Arbeitsstation 4b, etc. Wie sich weiter aus Fig. 3a ergibt, befindet sich die zweite Dorngruppe 10 in einer Bearbeitungsposition 17, in der die Arbeitsstation 4a in Wechselwirkung mit der zweiten Dorngruppe 10 treten kann, während sich die erste Dorngruppe 9 in einer radial äußeren Parkposition 18 befindet. Die im Uhrzeigersinn in Umfangsrichtung benachbarte Dorngruppe 3b ist relativ zu der Dornanordnung 3a radial nach innen versetzt, so dass sich deren erste Dorngruppe 9 in einer Bearbeitungsposition 17 der Arbeitsstation 4b befindet und die zweite Dorngruppe 10 in einer radial nach innen versetzten Parkposition 19. Die Dorngruppe 3c befindet sich in Bezug auf die Dorngruppe 3b in einer radial nach außen versetzten Position, so dass analog zur Dorngruppe 3a die zweite Dorngruppe 10 in einer Bearbeitungsposition 17 und die erste Dorngruppe 9 in einer radial äußeren Parkposition 8 angeordnet ist. Die Dorngruppe 3d ist wiederum radial nach innen versetzt, wohingegen die Dorngruppen 3e-3h auf einer radial äußeren Position angeordnet sind.

Wie sich weiter aus Fig. 3a ergibt, sind die Dornanordnungen 3a-3h geführt in einer Führungskulisse 20 einer Kurvenscheibe 14, die sich unterhalb der aus Übersichtlichkeitsgründen nicht dargestellten Transportmittel befindet.

An den Arbeitsstationen 4a-4h findet nun eine Bearbeitung teilweise sämtlicher Dorne 8 der Dornanordnungen, teilweise jeweils nur einer der Dorngruppen der Dornanordnungen statt. An der Arbeitsstation 4a wird ausschließlich die erste Dorngruppe 9 der Dornanordnung 3a mit einem Einlegeteil, beispielsweise einer zu verschweißenden Trennwand zur Herstellung einer Mehrkammertube bestückt. Bei der Arbeitsstation 4b wird von der Dornanordnung 3b lediglich die erste Dorngruppe 9 mit Tubenrohrkörpern bestückt, bei der Arbeitsstation 4c wird lediglich die zweite Dorngruppe 10 der Dornanordnung 3c bearbeitet, d.h. mit einem extrudierten Kunststoffring bestückt. An der Arbeitsstation 4d werden sämtliche Dorne der Dornanordnung 3d, d.h. beide Dorngruppen 9, 10 der Dornanordnung 3d gleichzeitig bearbeitet, d.h. es wird eine Schulter mit Ausguss geformt und gleichzeitig an die auf den Dornen beider Dorngruppen angeordneten Tubenrohrkörper angeformt. An den Arbeitsstationen 4e, 4f und 4g erfolgt jeweils eine gleichzeitige Kühlung sämtlicher Dorne 8, bzw. der derart angeordneten Tuben, der Dornanordnungen 3e, 3f, 3g. Bei der Arbeitsstation 4h wird ausschließlich die zweite Dorngruppe 10 bearbeitet, d.h. umgeladen auf die in Fig. 1 gezeigte Transporteinrichtung 5.

Um an den Arbeitsstationen 4a, 4b, 4c und 4h die jeweils andere Dorngruppe bearbeiten zu können, müssen die Dornanordnungen 4a, 4b, 4c, 4h relativ zur Bewegungsrichtung der Dornanordnungen 3a-3h zwischen den Arbeitsstationen 4a-4h translatorisch, hier in radialer Richtung nach außen bzw. innen verstellt werden. Hierzu wird die Kurvenscheibe 14 wie sich aus einer Zusammenschau der Fig. 3a bis 3d ergibt, entgegen der Bewegungsrichtung der Dornanordnungen 3a-3h von Arbeitsstation zu Arbeitsstation bei feststehenden Arbeitsmitteln im Uhrzeigersinn verstellt. Aufgrund der Führung der Dornanordnungen 3a-3h in der Führungskulisse 20 werden die vorerwärmten Dornanordnungen 3a, 3b, 3c, 3h bei der jeweiligen Arbeitsstation 4a, 4b, 4c und 4h relativ zur Bewegungsrichtung der Dornanordnungen 3a-3h von Arbeitsstation zu Arbeitsstation verstellt, so dass jeweils die andere der Dorngruppe in die jeweilige Bearbeitungsposition 17 verfährt, in der entsprechende Arbeitsstation 4a, 4b, 4c, 4h mit der entsprechenden Dorngruppe treten kann. Wie sich weiter aus einer Zusammenschau der Fig. 3a-3d ergibt, verbleiben die übrigen Dornanordnungen 3d, 3e, 3f auf einer festen Relativposition zu der jeweiligen Arbeitsstation 4d, 4e, 4f, 4g. Die Führungskulisse 20 hat hierzu in diesem Bereich einen konstanten Radius.

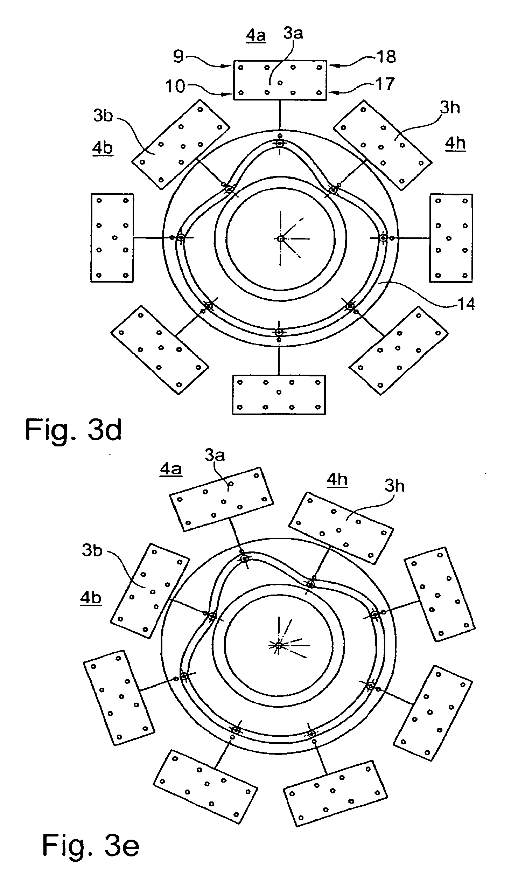

Insgesamt wurde die Kurvenscheibe 14 um 45° entgegen dem Uhrzeigersinn zwischen den in den Fig. 3a und Fig. 3d gezeigten Zuständen verstellt. In dem Zustand gemäß Fig. 3d können die jeweils anderen Dorngruppen der Dornanordnungen 3a, 3b, 3c, 3h bearbeitet werden. So befindet sich lediglich beispielhaft herausgegriffen nun die zweite Dorngruppe 10 der Dorngruppe 3a in der Bearbeitungsposition 17, wohingegen die erste Dorngruppe 9 der Dornanordnung 3a in die radial äußere Parkposition 18 translatorisch verstellt wurde.

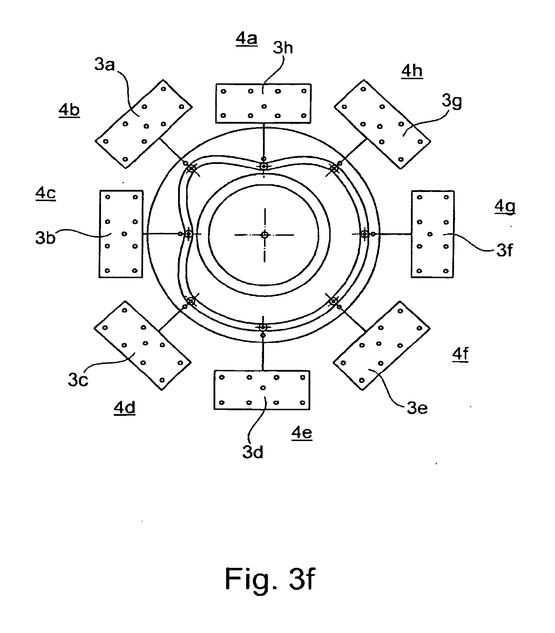

Nach erfolgter Bearbeitung der Dorngruppen 9, 10 bzw. Dornanordnungen 3a-3h müssen nun die Dornanordnungen 3a-3h in Umfangsrichtung entlang einer kreisförmigen Bewegungsbahn zur jeweils nächsten Arbeitsstation 4b, 4c, 4d, 4f, 4g, 4h, 4a verstellt werden. Hierzu werden die Transportmittel 2 synchron mit der Kurvenscheibe 14 um 45° im Gegenuhrzeigersinn weiter verstellt, so dass die Kurvenscheibe 14 die in Fig. 3f wiedergegebene Position einnimmt, die übrigens der in Fig. 3a gezeigten Position entspricht. Fig. 3e zeigt einen Zwischenbewegungszustand der Dornanordnungen 3a-3h auf ihrem Weg zur nächsten Arbeitsstation 4b, 4c, 4d, 4e, 4f, 4g, 4h, 4a. Nach erfolgter Bearbeitung einzelner Dorngruppen oder der gesamten Dornanordnungen wird darauf folgend, analog zu den Fig. 3b bis 3d die Kurvenscheibe wieder entgegen der Bewegungsrichtung der Dornanordnungen 3a-3h verstellt, so dass die an den Arbeitsstationen 4a, 4b, 4c, 4h befindlichen Dornanordnungen 3h, 3a, 3b, 3g zwischen einer Bearbeitungsposition und einer Parkposition verstellt werden.

Die anhand der Fig. 3a-3f erläuterte Anordnung bzw. Relativverstellmöglichkeit der Dornanordnungen 3a-3h ermöglicht, dass an den Arbeitsstationen 4a, 4b, 4c und 4h lediglich vier Werkzeuge, nicht acht Werkzeuge vorhanden sein müssen.

## Patentansprüche

1. Vorrichtung zum Herstellen von Tuben, mit mehreren Dornanordnungen (3a-3h), jeweils umfassend mehrere Dorne (8) auf denen die Tuben schrittweise an mehreren Arbeitsstationen (4a-4h) fertigbar sind, wobei die Dornanordnungen (3a-3h) mit Hilfe von Transportmitteln (2) von Arbeitsstation zu Arbeitsstation transportierbar sind,
**dadurch gekennzeichnet,**
**dass** die Dorne (8) mindestens einer der Dornanordnungen (3a-3h) aufgeteilt sind in eine erste und mindestens eine zweite Dorngruppe (9, 10), und dass die erste Dorngruppe (9) bei zumindest einer der Arbeitsstationen (4a-4h) aus einer der Arbeitsstation zugeordneten Bearbeitungsposition (17), in der die Arbeitsstation (4a-4h) mit der ersten Dorngruppe (9) in Wechselwirkung treten kann, relativ zu den Transportmitteln (2) in eine der Arbeitsstation (4a-4h) zugeordnete Parkposition (18, 19) und die zweite Dorngruppe (10) aus einer der Arbeitsstation (4a-4h) zugeordneten Parkposition (18, 19) in eine der Arbeitsstation zugeordnete Bearbeitungsposition (17) relativ zu den Transportmitteln (2) verstellbar ist.

2. Vorrichtung nach Anspruch 1,
**dadurch gekennzeichnet,**
**dass** die mindestens eine Arbeitsstation (4a-4h) bei der die erste und die zweite Dorngruppe (9, 10) verstellbar sind, eine der Anzahl der Dorne (8) der ersten oder der zweiten Dorngruppe (9, 10) entsprechende Anzahl an Werkzeugen aufweist.

3. Vorrichtung nach einem der Ansprüche 1 oder 2,
**dadurch gekennzeichnet,**
**dass** die erste und die zweite Dorngruppe (9, 10) gleichzeitig zwischen der Bearbeitungsposition (17) und der Parkposition (18, 19) bzw. zwischen der Parkposition (18, 19) und der Bearbeitungsposition (17) verstellbar sind.

4. Vorrichtung nach einem der vorhergehenden Ansprüche,
**dadurch gekennzeichnet,**
**dass** die erste und zweite Dorngruppe (9, 10) durch translatorisches Verstellen der die Dorngruppen (9, 10) aufweisenden Dornanordnung (3a-3h) zwischen der jeweiligen Bearbeitungsposition (17) und der jeweiligen Parkposition (18, 19) verstellbar sind.

5. Vorrichtung nach einem der vorhergehenden Ansprüche,
**dadurch gekennzeichnet,**
**dass** die Dorngruppen (9, 10) von Arbeitsstation (4a-4h) zu Arbeitsstation (4a-4h) auf einer kreisförmigen Bewegungsbahn transportierbar sind.

6. Vorrichtung nach Anspruch 5,
**dadurch gekennzeichnet,**
**dass** die Dornanordnungen (3a-3h) auf einem, vorzugsweise mittels eines Servomotors (12), rotierbaren Tisch (13) angeordnet sind, relativ zu dem die erste und die zweite Dorngruppe (9, 10) bei mindestens einer der Arbeitsstationen (4a-4h) verstellbar sind.

7. Vorrichtung nach einem der Ansprüche 5 oder 6,
**dadurch gekennzeichnet,**
**dass** die Verstellbewegung der ersten und der zweiten Dorngruppe (9, 10) zwischen der Bearbeitungsposition (17) und der Parkposition (18, 19) eine mittels einer Kurvenscheibe (14) geführte Bewegung ist.

8. Vorrichtung nach Anspruch 7,
**dadurch gekennzeichnet,**
**dass** die Kurvenscheibe (14) bei einem Transport der Dornanordnungen (3a-3h) von Arbeitsstation (4a-4h) zu Arbeitsstation (4a-4h) in eine erste Richtung, vorzugsweise in die Transportrichtung der Dornanordnungen (3a-3h), und zum Verstellen der ersten und der zweiten Dorngruppe (9, 10) zwischen der Bearbeitungsposition (17) und der Parkposition (18, 19) bzw. zwischen der Parkposition (18, 19) und der Bearbeitungsposition (17) in eine zweite, der ersten Richtung entgegengesetzte zweite Richtung rotierbar ist.

9. Vorrichtung nach einem der vorhergehenden Ansprüche,
**dadurch gekennzeichnet,**
**dass** eine Parkposition (18, 19) der ersten und/oder der zweiten Dorngruppe (9, 10) an einer der Arbeitsstationen (4a-4h) die Bearbeitungsposition (17) einer anderen, vorzugsweise der in Transportrichtung nächsten Arbeitsstation (4a-4h) entspricht.

10. Vorrichtung nach einem der vorhergehenden Ansprüche,
**dadurch gekennzeichnet,**
**dass** mindestens eine der Arbeitsstationen (4a-4h) eine Entladestation oder eine Umladestation zum Umladen noch unfertiger Tuben auf Dorne (8) ist, die mittels einer Transporteinrichtung (5) zu mindestens einer weiteren Arbeitsstation, vorzugsweise zu mindestens einer Deckelmontagestation, transportierbar sind.

11. Verfahren zum Herstellen von Tuben, insbesondere unter Verwendung einer Vorrichtung (1) nach einem der vorhergehenden Ansprüche, wobei mehrere Dornanordnungen (3a-3h), jeweils umfassend mehrere Dorne (8) auf denen die Tuben schrittweise an mehreren Arbeitsstationen (4a-4h) fertigbar sind, vorgesehen werden, wobei die Dornanordnungen (3a-3h) von Arbeitsstation (4a-4h) zu Arbeitsstation (4a-4h) transportiert werden,
**dadurch gekennzeichnet,**
**dass** die Dorne (8) der Dornanordnungen (3a-3h) aufgeteilt sind in eine erste und mindestens eine zweite Dorngruppe (9, 10), und dass die erste Dorngruppe (9) bei zumindest einer der Arbeitsstationen (4a-4h) aus einer der Arbeitsstation (4a-4h) zugeordneten Bearbeitungsposition (17), in der die Arbeitsstation (4a-4h) mit der ersten Dorngruppe (9, 10) in Wechselwirkung treten kann, relativ zu den Transportmitteln (2) in eine der Arbeitsstation (4a-4h) zugeordnete Parkposition (18, 19) und die zweite Dorngruppe (10) aus einer der Arbeitsstation (4a-4h) zugeordneten Parkposition (18, 19) in eine der Arbeitsstation (4a-4h) zugeordnete Bearbeitungsposition (17) relativ zu den Transportmitteln (2) verstellt werden.

12. Verfahren nach Anspruch 11,
**dadurch gekennzeichnet,**
**dass** die erste und zweite Dorngruppe (9, 10) durch translatorisches Verstellen der die Dorngruppen (9, 10) aufweisenden Dornanordnung (3a-3h) zwischen der jeweiligen Bearbeitungsposition (17) und der jeweiligen Parkposition (18, 19) verstellt werden.

13. Verfahren nach einem der Ansprüche 11 oder 12,
**dadurch gekennzeichnet,**
**dass** die Dorngruppen (9, 10) von Arbeitsstation (4a-4h) zu Arbeitsstation (4a-4h) auf einer kreisförmigen Bewegungsbahn transportiert werden.

14. Verfahren nach einem der Ansprüche 11 bis 13,
**dadurch gekennzeichnet,**
**dass** die Verstellbewegung der ersten und der zweiten Dorngruppe (9, 10) zwischen der Bearbeitungsposition (17) und der Parkposition (18, 19) eine mittels einer Kurvenscheibe (14) realisiert wird.

15. Verfahren nach Anspruch 14,
**dadurch gekennzeichnet,**
**dass** die Kurvenscheibe (14) bei einem Transport der Dornanordnungen (3a-3h) von Arbeitsstation (4a-4h) zu Arbeitsstation (4a-4h) in eine erste Richtung, vorzugsweise in die Transportrichtung der Dornanordnungen (3a-3h), und zum Verstellen der ersten und der zweiten Dorngruppe (9, 10) zwischen der Bearbeitungsposition (17) und der Parkposition (18, 19) bzw. zwischen der Parkposition (18, 19) und der Bearbeitungsposition (17) in eine zweite, der ersten Richtung entgegengesetzte zweite Richtung rotiert wird.

## Claims

1. Device for producing tubes, comprising a plurality of mandril arrangements (3a-3h), each comprising a plurality of mandrils (8) on which the tubes can be made in steps at a plurality of workstations (4a-4h), the mandril arrangements (3a-3h) being able to be transported from workstation to workstation via transport means (2), **characterised in that** the mandrils (8) of at least one of the mandril arrangements (3a-3h) are divided into a first and at least a second mandril group (9, 10), and **in that** the first mandril group (9) at at least one of the workstations (4a-4h) can be displaced, relative to the transport means (2), from a processing position (17), associated with the workstation, in which the workstation (4a-4h) can interact with the first mandril group (9), into a stand-by position (18, 19) associated with the workstation (4a-4h), and the second mandril group (10) can be displaced relative to the transport means (2), from a stand-by position (18, 19) associated with the workstation (4a-4h), into a processing position (17) associated with the workstation.

2. Device according to claim 1, **characterised in that** the at least one workstation (4a-4h), at which the first and the second mandril groups (9, 10) can be displaced, comprises a number of tools which corresponds to the number of mandrils (8) of the first or the second mandril group (9, 10).

3. Device according to either claim 1 or claim 2, **characterised in that** the first and the second mandril group (9, 10) can be displaced simultaneously between the processing position (17) and the stand-by position (18, 19) or between the stand-by position (18, 19) and the processing position (17).

4. Device according to any of the preceding claims, **characterised in that** the first and second mandril groups (9, 10) can be displaced between the respective processing position (17) and the respective stand-by position (18, 19) by means of translatory displacement of the mandril arrangement (3a-3h) which comprises the mandril groups (9, 10).

5. Device according to any of the preceding claims, **characterised in that** the mandril groups (9, 10) can be transported from workstation (4a-4h) to workstation (4a-4h) on a circular trajectory.

6. Device according to claim 5, **characterised in that** the mandril arrangements (3a-3h) are arranged on a table (13), which can be rotated, preferably by means of a servomotor (12), and relative to which the first and the second mandril groups (9, 10) can be displaced at at least one of the workstations (4a-4h).

7. Device according to either claim 5 or claim 6, **characterised in that** the displacement movement of the first and the second mandril group (9, 10) between the processing position (17) and the stand-by position (18, 19) is a movement guided by means of a cam disc (14).

8. Device according to claim 7, **characterised in that** the cam disc (14) can be rotated in a first direction, preferably in the transport direction of the mandril arrangements (3a-3h), during transportation of the mandril arrangements (3a-3h) from workstation (4a-4h) to workstation (4a-4h), and can be rotated in a second direction, running counter to the first direction, to displace the first and the second mandril group (9, 10) between the processing position (17) and the stand-by position (18, 19) or between the stand-by position (18, 19) and the processing position (17).

9. Device according to any of the preceding claims, **characterised in that** a stand-by position (18, 19) of the first and/or the second mandril group (9, 10) at one of the workstations (4a-4h) corresponds to the processing position (17) of another workstation (4a-4h), which is preferably next in the transport direction.

10. Device according to one of the preceding claims, **characterised in that** at least one of the workstations (4a-4h) is an unloading station or a reloading station for reloading still unfinished tubes onto mandrils (8), which can be transported by means of a transport device (5) to at least one further workstation, preferably to at least a lid fitting station.

11. Method for producing tubes, in particular using a device (1) according to any of the preceding claims, a plurality of mandril arrangements (3a-3h) being provided, each comprising a plurality of mandrils (8), on which the tubes can be made in steps at a plurality of workstations (4a-4h), the mandril arrangements (3a-3h) being able to be transported from workstation (4a-4h) to workstation (4a-4h),
**characterised in that** the mandrils (8) of the mandril arrangements (3a-3h) are divided into a first and at least a second mandril group (9, 10), and **in that** the first mandril group (9) at at least one of the workstations (4a-4h) can be displaced relative to the transport means (2), from a processing position (17) associated with the workstation, in which the workstation (4a-4h) can interact with the first mandril group (9), into a stand-by position (18, 19) associated with the workstation (4a-4h), and the second mandril group (10) can be displaced relative to the transport means (2) from a stand-by position (18, 19) associated with the workstation (4a-4h), into a processing position (17) associated with the workstation.

12. Method according to claim 11, **characterised in that** the first and second mandril groups (9, 10) are displaced between the respective processing position (17) and the respective stand-by position (18, 19) by means of translatory displacement of the mandril arrangement (3a-3h), which comprises the mandril groups (9, 10).

13. Method according to either claim 11 or claim 12, **characterised in that** the mandril groups (9, 10) are transported from workstation (4a-4h) to workstation (4a-4h) on a circular trajectory.

14. Method according to any of claims 11 to 13, **characterised in that** the displacement movement of the first and the second mandril groups (9, 10) between the processing position (17) and the stand-by position (18, 19) is achieved by means of a cam disc (1A).

15. Method according to claim 14, **characterised in that** the cam disc (14) can be rotated in a first direction, preferably in the transport direction of the mandril arrangements (3a-3h), during transportation of the mandril arrangements (3a-3h) from workstation (4a-4h) to workstation (4a-4h), and can be rotated in a second direction, running counter to the first direction, to displace the first and the second mandril group (9, 10) between the processing position (17) and the stand-by position (18, 19) or between the stand-by position (18, 19) and the processing position (17).

## Revendications

1. Dispositif de fabrication de tubes, comprenant plusieurs agencements de mandrins (3a-3h), comprenant à chaque fois plusieurs mandrins (8) sur lesquels les tubes peuvent être fabriqués par étapes sur plusieurs postes de travail (4a-4h), les agencements de mandrins (3a-3h) pouvant être transportés à l'aide de moyens de transport (2) d'un poste de travail à un autre,
**caractérisé en ce que**
les mandrins (8) d'au moins l'un des agencements de mandrins (3a-3h) sont divisés en un premier et au moins un deuxième groupe de mandrins (9, 10), et **en ce que** le premier groupe de mandrins (9), au moins dans l'un des postes de travail (4a-4h), peut être déplacé d'une position de traitement (17) associée au poste de travail, dans laquelle le poste de travail (4a-4h) peut entrer en interaction avec le premier groupe de mandrins (9), par rapport aux moyens de transport (2), dans une position de stationnement (18, 19) associée au poste de travail (4a-4h), et le deuxième groupe de mandrins (10) peut être déplacé d'une position de stationnement (18, 19) associée au poste de travail (4a-4h) dans une position de traitement (17) associée au poste de travail, par rapport aux moyens de transport (2).

2. Dispositif selon la revendication 1,
**caractérisé en ce que**
l'au moins un poste de travail (4a-4h), au niveau duquel le premier et le deuxième groupe de mandrins (9, 10) peuvent être déplacés, présente un nombre d'outils correspondant au nombre de mandrins (8) du premier ou du deuxième groupe de mandrins (9, 10).

3. Dispositif selon l'une quelconque des revendications 1 ou 2,
**caractérisé en ce que**
le premier et le deuxième groupe de mandrins (9, 10) peuvent être déplacés simultanément entre la position de traitement (17) et la position de stationnement (18, 19) respectivement entre la position de stationnement (18, 19) et la position de traitement (17).

4. Dispositif selon l'une quelconque des revendications précédentes,
**caractérisé en ce que**
le premier et le deuxième groupe de mandrins (9, 10) peuvent être déplacés par déplacement en translation de l'agencement de mandrins (3a-3h) présentant les groupes de mandrins (9, 10), entre la position de traitement respective (17) et la position de stationnement respective (18, 19).

5. Dispositif selon l'une quelconque des revendications précédentes,
**caractérisé en ce que**
les groupes de mandrins (9, 10) peuvent être transportés d'un poste de travail (4a-4h) à un autre (4a-4h) sur une voie de transport circulaire.

6. Dispositif selon la revendication 5,
**caractérisé en ce que**
les agencements de mandrins (3a-3h) sont disposés sur une table (13) rotative, de préférence au moyen d'un servomoteur (12), par rapport à laquelle le premier et le deuxième groupe de mandrins (9, 10) peuvent être déplacés au niveau d'au moins l'un des postes de travail (4a-4h).

7. Dispositif selon l'une quelconque des revendications 5 ou 6,
**caractérisé en ce que**
le mouvement de déplacement du premier et du deuxième groupe de mandrins (9, 10) entre la position de traitement (17) et la position de stationnement (18, 19) est un mouvement guidé au moyen d'un disque à cames (14).

8. Dispositif selon la revendication 7,
**caractérisé en ce que**
le disque à cames (14) dans le cas d'un transport des agencements de mandrins (3a-3h) d'un poste de travail (4a-4h) à un autre poste de travail (4a-4h), peut être tourné dans une première direction, de préférence dans la direction de transport des agencements de mandrins (3a-3h), et pour le déplacement du premier et du deuxième groupe de mandrins (9, 10) entre la position de traitement (17) et la position de stationnement (18, 19) ou entre la position de stationnement (18, 19) et la position de traitement (17), peut être tourné dans une deuxième direction opposée à la première direction.

9. Dispositif selon l'une quelconque des revendications précédentes,
**caractérisé en ce**
**qu'**une position de stationnement (18, 19) du premier et/ou du deuxième groupe de mandrins (9, 10) au niveau de l'un des postes de travail (4a-4h) correspond à la position de traitement (17) d'un autre poste de travail (4a-4h), de préférence au poste de travail le plus proche dans la direction de transport.

10. Dispositif selon l'une quelconque des revendications précédentes,
**caractérisé en ce**
**qu'**au moins l'un des postes de travail (4a-4h) est un poste de déchargement ou un poste de transfert pour transférer des tubes pas encore finis à des mandrins (8), qui peuvent être transportés au moyen d'un dispositif de transport (5) à au moins un autre poste de travail, de préférence à au moins un poste de montage de couvercle.

11. Procédé de fabrication de tubes, notamment utilisant un dispositif (1) selon l'une quelconque des revendications précédentes, dans lequel sont prévus plusieurs agencements de mandrins (3a-3h), comprenant à chaque fois plusieurs mandrins (8) sur lesquels les tubes peuvent être fabriqués par étapes sur plusieurs postes de travail (4a-4h), les agencements de mandrins (3a-h) étant transportés d'un poste de travail (4a-4h) à un autre (4a-4h),
**caractérisé en ce que**
les mandrins (8) des agencements de mandrins (3a-3h) sont divisés en un premier et au moins un deuxième groupe de mandrins (9, 10), et **en ce que** le premier groupe de mandrins (9), au moins dans l'un des postes de travail (4a-4h), peut être déplacé d'une position de traitement (17) associée au poste de travail, dans laquelle le poste de travail (4a-4h) peut entrer en interaction avec le premier groupe de mandrins (9), par rapport aux moyens de transport (2), dans une position de stationnement (18, 19) associée au poste de travail (4a-4h), et le deuxième groupe de mandrins (10) peut être déplacé d'une position de stationnement (18, 19) associée au poste de travail (4a-4h) dans une position de traitement (17) associée au poste de travail, par rapport aux moyens de transport (2).

12. Procédé selon la revendication 11,
**caractérisé en ce que**
le premier et le deuxième groupe de mandrins (9, 10) sont déplacés par un déplacement en translation de l'agencement de mandrins (3a-3h) présentant les groupes de mandrins (9, 10) entre la position de traitement (17) respective et la position de stationnement (18, 19) respective.

13. Procédé selon l'une quelconque des revendications 11 ou 12,
**caractérisé en ce que**
les groupes de mandrins (9, 10) sont transportés d'un poste de travail (4a-4h) à un autre poste de travail (4a-4h) sur une voie de transport circulaire.

14. Procédé selon l'une quelconque des revendications 11 à 13,
**caractérisé en ce que**
le mouvement de déplacement du premier et du deuxième groupe de mandrins (9, 10) entre la position de traitement (17) et la position de stationnement (18, 19) est réalisé au moyen d'un disque à cames (14).

15. Procédé selon la revendication 14,
**caractérisé en ce que**
le disque à cames (14) dans le cas d'un transport des agencements de mandrins (3a-3h) d'un poste de travail (4a-4h) à un autre poste de travail (4a-4h), est tourné dans une première direction, de préférence dans la direction de transport des agencements de mandrins (3a-3h), et pour le déplacement du premier et du deuxième groupe de mandrins (9, 10) entre la position de traitement (17) et la position de stationnement (18, 19) ou entre la position de stationnement (18, 19) et la position de traitement (17), est tourné dans une deuxième direction opposée à la première direction.
